# EUROPEAN PATENT APPLICATION

(11) **EP 4 321 542 A1**
(43) Date of publication of application: **14.02.2024**
(21) Application number: 22784896.7
(22) Date of filing: 05.04.2022
(51) Int. Cl.: C08F 36/06, C08F 8/42, C08F 8/34, C08L 15/00, C08L 9/00, B60C 1/00

(54) **LIQUID BUTADIENE COMPOUND WITH BOTH ENDS MODIFIED, METHOD FOR PREPARING SAME, AND USE OF SAME**

(30) Priority: 06.04.2021 KR 20210044779; 16.03.2022 KR 20220032424; 16.03.2022 KR 20220032425
(71) Applicant: Pusan National University Industry-University Cooperation Foundation, Busan 46241 (KR)
(72) Inventor: PAIK, Hyun Jong, Busan 46232 (KR); KIM, Won Ho, Busan 48091 (KR); YEOM, Gyeong Dong, Busan 48707 (KR); KIM, Dong Hyuk, Busan 47554 (KR); CHOI, Ha Eun, Busan 46281 (KR); SONG, Sang Hoon, Busan 49075 (KR)
(74) Representative: Gulde & Partner
(86) International application number: PCT/KR2022/004824
(87) International publication number: WO 2022/215986

(57) **Abstract**

The present invention relates to a liquid butadiene compound with both ends modified, a method for preparing same, and a use thereof. More specifically, the present invention provides a liquid bu-tadiene rubber compound with both ends modified that is synthesized using a chain transfer agent having a triethoxysily functional group and a tetrasulfide functional group, and a 1,3-butadiene monomer, a rubber composition for a tire comprising same, a method for preparing same, and the like.

According to the present invention, by introducing a silica-friendly functional group at both ends of the chain, hysteresis or the like caused by the chain ends of an existing liquid butadiene rubber is controlled, and thus, various performances affecting fuel efficiency characteristics can be improved.

## Description

### TECHNICAL FIELD

The present invention relates to a liquid butadiene compound with both ends modified, a method for preparing the same, and a use of the same, and more particularly, a liquid butadiene rubber compound with both ends modified synthesized by using a chain transfer agent having a triethoxysilyl functional group and a tetrasulfide functional group and a 1,3-butadiene monomer, a rubber composition including the same, a tire manufactured using the same, and a manufacturing method thereof.

### BACKGROUND ART

Currently, the demand for improved fuel efficiency of automobiles is continuously increasing due to the strengthening of regulations on greenhouse gas emission in countries worldwide. Accordingly, the most influential factor in the paradigm change in the automobile industry is eco-friendliness, and electric vehicles have emerged as eco-friendly core technologies for reducing greenhouse gas emissions. From 2020, the EU will introduce a regulation that prevents carbon dioxide emissions from exceeding 95 g/km per vehicle based on the average number of automobiles sold, and similar fuel efficiency regulations will be implemented in major automobile consumer countries such as the United States and Japan.

As the automobile development trend is shifting from internal combustion engine vehicles to electric vehicles, tires are also required to exhibit performance suitable for electric vehicles. Due to the limited battery capacity of electric vehicles, a dramatic reduction in tire rolling resistance is required to ensure a long driving range. In addition, due to the characteristics of electric motors, it is also necessary to improve abrasion resistance performance to withstand the high torque exhibited from the beginning of acceleration and the high load of the motor/battery.

Since 1993, led by Michelin, tire manufacturers have conducted research to use silica as a reinforcing agent in place of existing carbon black to reduce greenhouse gas emissions. Unlike carbon black, which is hydrophobic, a silane coupling agent has been used to silica, which has hydrophilic surface properties, to improve the traction and rolling resistance of tire compounds, and the conversion of the filler technology provided an opportunity to introduce a functional group into polymer chains.

Meanwhile, a tire is a vulcanized product filled with various additives including a reinforcing agent. For ease of processing in the manufacturing process, a large amount of process oil such as TDAE (treated distillate aromatic extracts) oil is added as a processing aid. Since tires undergo large and small deformations at high temperatures during driving and braking, the added process oil gradually migrates and comes out of the compound as the driving distance and time increase. The compound from which the process oil has escaped becomes hard and has worse properties than the initial properties. In particular, the tread that is hardened during braking becomes less deformable so that the contact area with the road surface is reduced and the braking performance is deteriorated. Liquid butadiene rubber is a process aid and at the same time, it can form a cross-link with the rubber main chain of the compound during the curing process. Therefore, almost no migration occurs after the manufacturing of the tires, and the original properties may be maintained for a long time. In addition, the compound glass transition temperature (T_{g}) may be controlled according to the microstructure of the liquid butadiene rubber so that excellent snow braking performance and abrasion resistance can be obtained when a liquid butadiene rubber of a low T_{g} is applied.

However, due to the large hysteresis resulting from the chain ends of liquid butadiene rubber, there is a disadvantage in the rolling resistance that affects the fuel economy characteristics. Therefore, to improve this, there is a need for a liquid butadiene rubber synthesis technology capable of chemically fixing chain ends to a filler.

### DETAILED DESCRIPTION OF THE INVENTION

### TECHNICAL PROBLEM

An object of the present invention is to provide a novel liquid butadiene compound with both ends modified so that chain ends may be chemically fixed to a filler to impart characteristics such as excellent fuel efficiency performance and wear performance; and a method for preparing the same.

Another object of the present invention is provide a liquid butadiene rubber composition for manufacturing a tire using a liquid butadiene compound with both ends modified so that chain ends may be chemically fixed to a filler to impart characteristics such as excellent fuel efficiency performance and wear performance to the tire; and a tire manufacturing method using the same.

### TECHNICAL SOLUTION

To achieve the above object, the present invention provides a compound represented by Formula 1 below:

<Formula 1> R'ₓ(RO)₃₋ₓ-Si-(CH₂)ₐ-S_{c}-(M)-S_{d}-(CH₂)_{b}-Si-(OR)₃₋ₓR'ₓ

In Formula 1 above, R and R' may each be same or different and are selected from hydrogen or (C1-C6) alkyl; x is an integer selected from 0 to 2; a and b are each independently an integer selected from 1 to 5; c and d are each independently an integer selected from 1 to 9; and M is a polymer chain including one or two or more diene monomers.

The M above may be one or two or more selected from compounds represented by Formulas 2-1, 2-2, or 2-3 below, may be composed of 20 to 25 mol% of the compound represented by Formula 2-1 and 75 to 80 mol% of the compounds represented by Formulas 2-2 and 2-3, and may have a number average molecular weight of 500 to 50,000 g/mol.

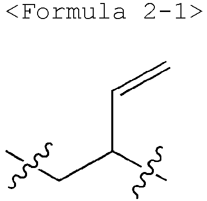

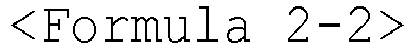

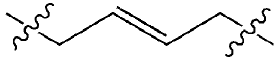

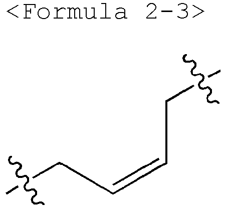

The M above may be a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer.

The compound may be a butadiene rubber with both ends modified.

The compound may have a vinyl content of 15 to 30 parts by weight based on 100 parts by weight of the total compound, and 1 to 3 functional groups of a silyl group may be included per the compound.

The present invention provides a compound preparation method including: a first step of preparing a radical compound by subjecting an initiator and a monomer to a reaction; a second step of preparing a chain transfer agent radical by subjecting the prepared radical compound to a reaction with a chain transfer agent represented by Formula 3 below; a third step of forming an intermediate radical compound with a single end modified by subjecting the prepared chain transfer agent radical and the monomer to a polymerization reaction; and a fourth step of forming a compound with both ends modified by subjecting the formed intermediate radical compound to a reaction with a chain transfer agent represented by Formula 3 below.

<Formula 3> R'ₓ(RO)₃₋ₓ-Si-(CH₂)ₐ-S_{c}-(CH₂)_{b}-Si-(OR) ₃₋ₓR'ₓ

In Formula 3 above, R and R' may each be same or different and are selected from hydrogen or (C1-C6) alkyl; x is an integer selected from 0 to 2; a and b are each independently an integer selected from 1 to 5; and c is an integer selected from 1 to 9.

In the second step and the fourth step, a -Sc- bond provided to the chain transfer agent may be broken by the radical compound to react.

The first to fourth steps may be performed at 130°C to 150°C.

The initiator, the chain transfer agent, and the monomer may be added at a molar ratio of 1: (5 to 20):(500 to 2000).

The present invention provides a rubber composition for tire, including a rubber polymer; and a compound represented by Formula 1 above as active ingredients.

The M above may be a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer.

The compound may be a butadiene rubber with both ends modified.

The compound may have a vinyl content of 15 to 30 parts by weight based on 100 parts by weight of the total compound, and 1 to 3 functional groups of a silyl group may be included per the compound.

The rubber polymer may be selected from natural rubber; one or more butadiene-based rubbers selected from the group consisting of butadiene rubber, styrene-butadiene rubber, and nitrile rubber; or a mixed rubber thereof.

The compound may be included in an amount of 5 to 50 parts by weight based on 100 parts by weight of the rubber polymer.

The present invention provides a tire manufactured by including the rubber composition for tire above.

The tire may be manufactured by further including one or two or more selected from the group consisting of silica, a coupling agent, a softener, a vulcanizing agent, a vulcanization accelerator, a cross-linking agent, a cross-linking activator, an antioxidant, an accelerator, and an super accelerator.

In addition, the present invention provides a tire manufacturing method including: a first step of preparing a rubber mixture by mixing the rubber composition for tire and silica; a second step of molding the prepared rubber mixture into a tire shape; and a third step of performing a vulcanization reaction by heating the rubber mixture of a tire shape.

The rubber polymer may be selected from natural rubber; one or more butadiene-based rubbers selected from the group consisting of butadiene rubber, styrene-butadiene rubber, and nitrile rubber; or a mixed rubber thereof.

The rubber polymer may be a mixture of butadiene rubber and styrene-butadiene rubber at a weight ratio of 1:(3 to 5).

### ADVANTAGEOUS EFFECTS

The compound according to the present invention is a liquid butadiene rubber with both ends modified using a chain transfer agent having a triethoxysilyl functional group and a tetra sulfide functional group and a 1,3-butadiene monomer. Since silica-friendly functional groups are introduced to both chain ends, hysteresis or the like resulting from chain ends of an existing liquid butadiene rubber can be adjusted to improve various performance properties that affect fuel efficiency characteristics, deterioration of properties due to changes over time may be prevented, and wear resistance can be improved by lowering the glass transition temperature (T_{g}) of a liquid butadiene rubber.

### DESCRIPTION OF THE DRAWINGS

FIG. 1 shows a preparation process of compound according to one embodiment of the present invention.

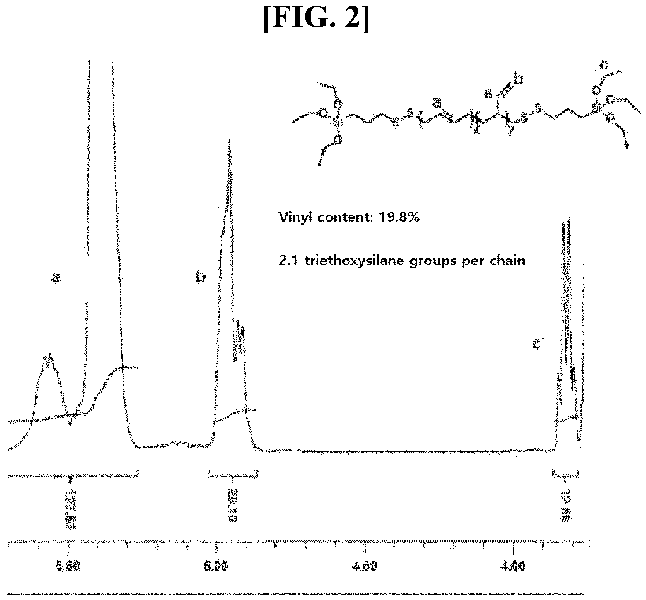

FIG. 2 shows a graph of ¹H-NMR results of Compound A prepared according to Example 1-1 of the present invention.

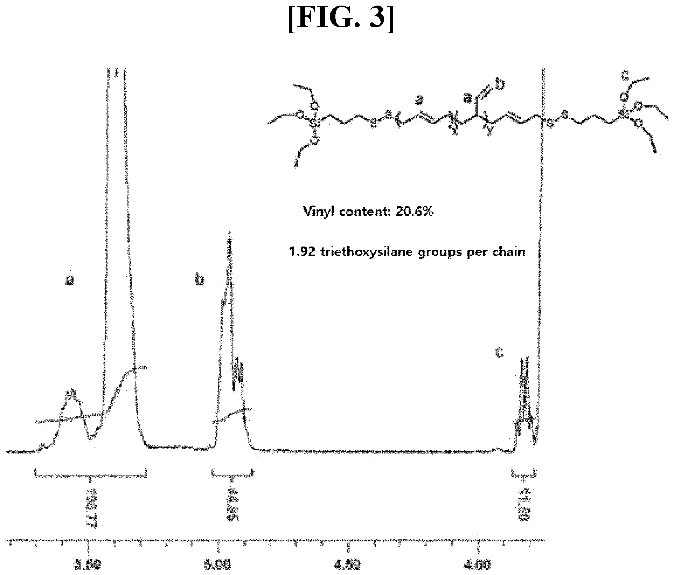

FIG. 3 shows a graph of ¹H-NMR results of Compound B prepared according to Example 1-2 of the present invention.

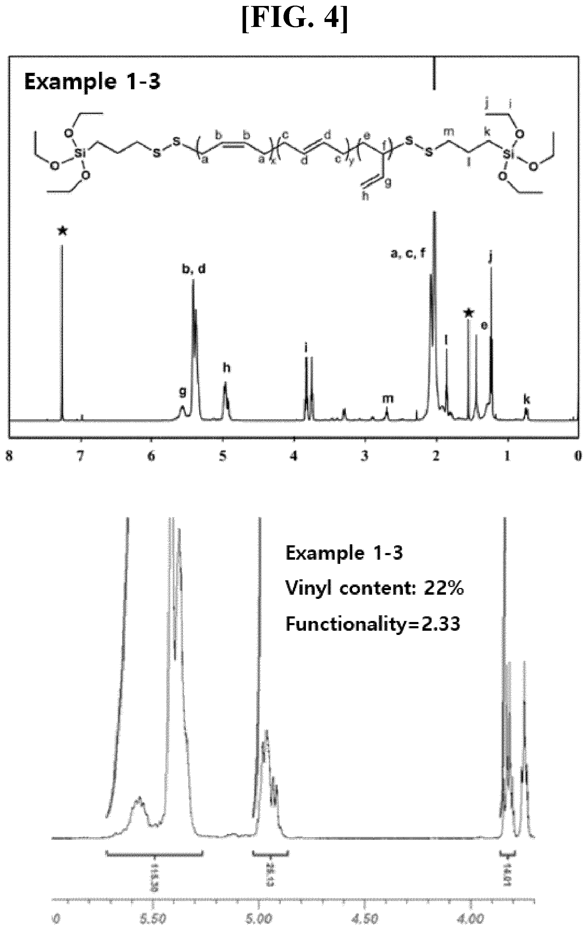

FIG. 4 shows a graph of ¹H-NMR results of Compound C prepared according to Example 1-3 of the present invention.

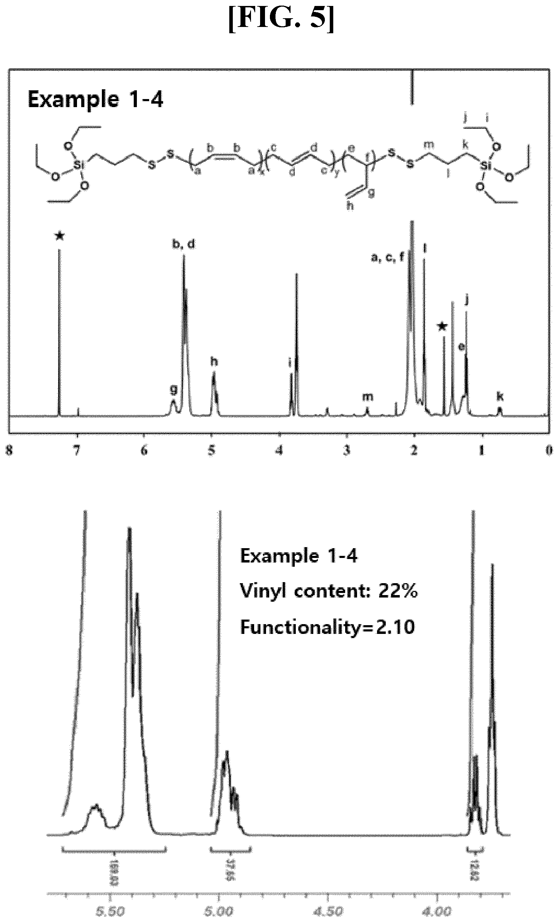

FIG. 5 shows a graph of ¹H-NMR results of Compound D prepared according to Example 1-4 of the present invention.

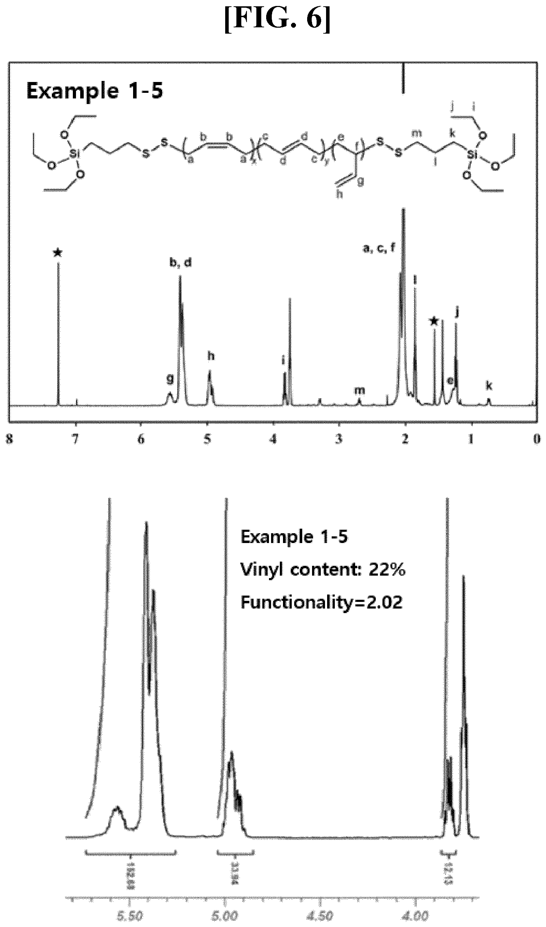

FIG. 6 shows a graph of ¹H-NMR results of Compound E prepared according to Example 1-5 of the present invention.

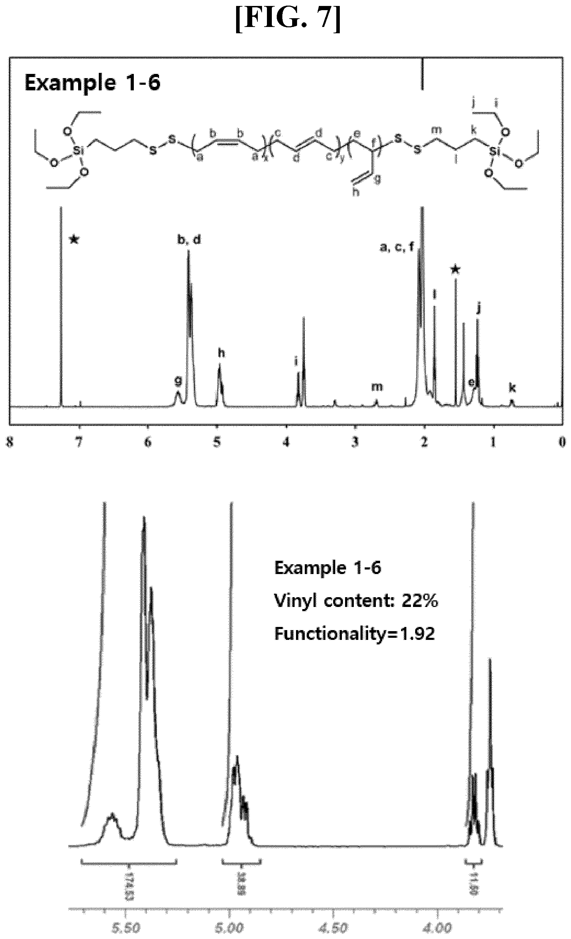

FIG. 7 shows a graph of ¹H-NMR results of Compound F prepared according to Example 1-6 of the present invention.

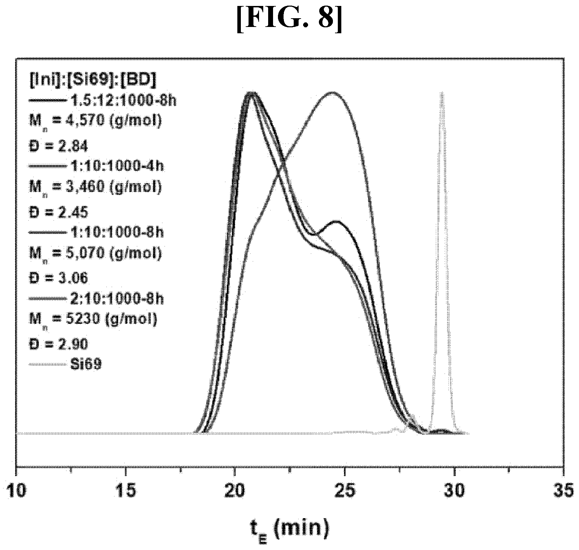

FIG. 8 shows a graph of results of size exclusion chromatography (SEC) analysis of Compounds C, D, E, and F prepared according to Examples 1-3 to 1-6 of the present invention.

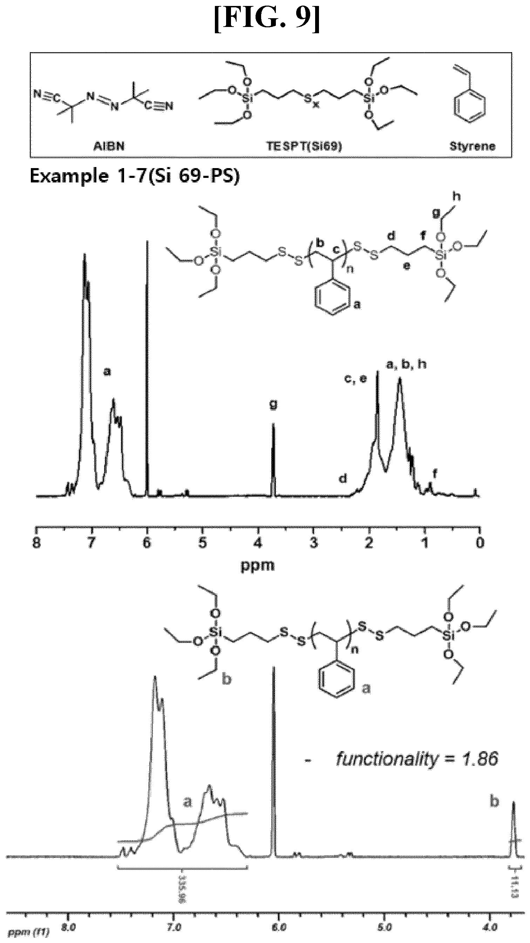

FIG. 9 shows a graph of ¹H-NMR results of Compound G prepared according to Example 1-7 of the present invention.

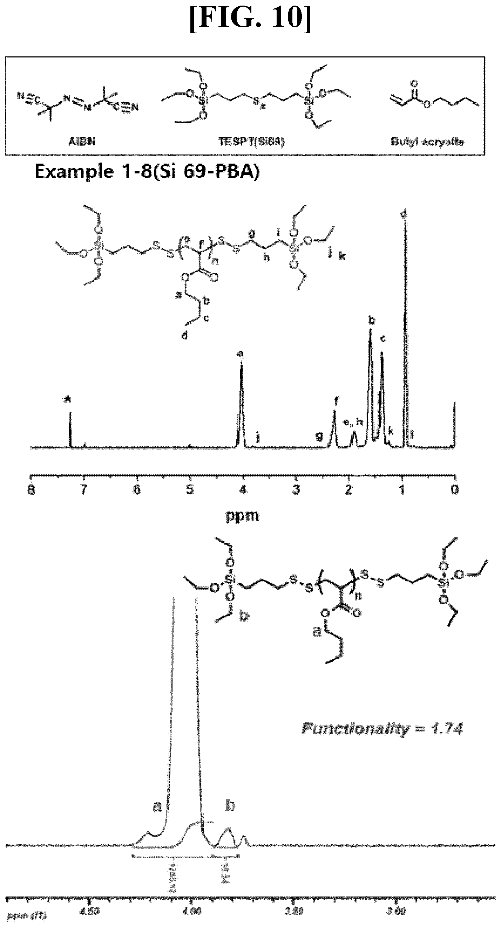

FIG. 10 shows a graph of ¹H-NMR results of Compound H prepared according to Example 1-8 of the present invention.

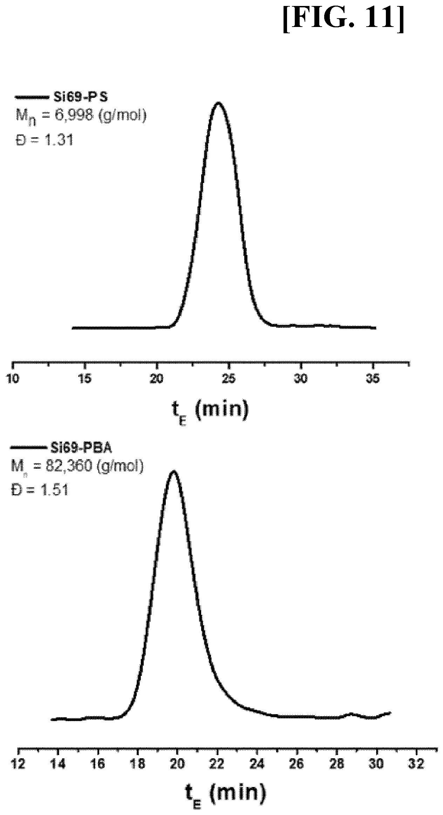

FIG. 11 shows a graph of results of SEC analysis of Compounds G and H prepared according to Examples 1-7 to 1-8 of the present invention.

### BEST MODE

Hereinafter, the present invention will be described in detail.

As the terms used in the present invention, general terms that are currently widely used were selected as much as possible while considering the function in the present invention, but these may vary depending on the intention of those who are skilled in the art, a precedent, the emergence of a new technology, or the like. Therefore, the terms used in the present invention should be defined based on the meaning of the terms and the overall content of the present invention, rather than simply the names of the terms.

Throughout the specification, when it is said that a part "includes" a certain component, this means that, unless specifically stated otherwise, other components may be further included, rather than excluding other components.

The present invention provides a compound represented by Formula 1 below:

<Formula 1> R'ₓ(RO)₃₋ₓ-Si-(CH₂)ₐ-S_{c}-(M)-S_{d}-(CH₂)_{b}-Si-(OR) ₃₋ₓR'ₓ

In Formula 1 above, R and R' may each be same or different and are selected from hydrogen or (C1-C6) alkyl; x is an integer selected from 0 to 2; a and b are each independently an integer selected from 1 to 5; c and d are each independently an integer selected from 1 to 9; and M is a polymer chain including one or two or more diene monomers.

Preferably, the M above may be one or two or more selected from compounds represented by Formulas 2-1, 2-2, or 2-3 below:

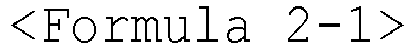

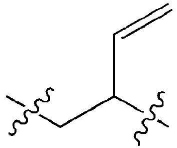

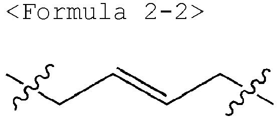

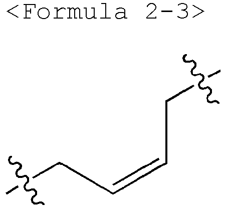

Preferably, the M above may be composed of 20 to 25 mol% of the compound represented by Formula 2-1 and 75 to 80 mol% of the compounds represented by Formulas 2-2 and 2-3, but is not limited thereto.

Preferably, the M above may have a number average molecular weight of 500 to 50,000 g/mol, more preferably 1000 to 10,000 g/mol, but is not limited thereto.

Alternatively, the M above may be a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer, but is not limited thereto.

A compound according to the present invention may include a unit structure derived from the M above, and may preferably be a butadiene polymer, that is, a butadiene rubber with both ends modified, but is not limited thereto.

Preferably, the compound may have a vinyl content of 15 to 30 parts by weight, more preferably 18 to 25 parts by weight, based on 100 parts by weight of the total compound, but is not limited thereto.

Preferably, the compound may include 1 to 3 functional groups of a silyl group per the compound, but is not limited thereto.

The present invention provides a preparation method of the compound.

A preparation method of the compound may include: a first step of preparing a radical compound by subjecting an initiator and a monomer to a reaction; a second step of preparing a chain transfer agent radical by subjecting the prepared radical compound to a reaction with a chain transfer agent represented by Formula 3 below; a third step of forming an intermediate radical compound with a single end modified by subjecting the prepared chain transfer agent radical and the monomer to a polymerization reaction; and a fourth step of forming a compound with both ends modified by subjecting the formed intermediate radical compound to a reaction with a chain transfer agent represented by Formula 3 below.

<Formula 3> R'ₓ(RO)₃₋ₓ-Si-(CH₂)ₐ-S_{c}-(CH₂)_{b}-Si-(OR)₃₋ₓR'ₓ

In Formula 3, R and R' may each be same or different and are selected from hydrogen or (C1-C6) alkyl; x is an integer selected from 0 to 2; a and b are each independently an integer selected from 1 to 5; and c is an integer selected from 1 to 9.

The first step of preparing a radical compound may be performed by putting an initiator and a monomer to a reaction, wherein the initiator and the monomer may be added at a molar ratio of 1:(500 to 2000), preferably 1:(500 to 1000) to react.

The initiator may be selected from di-tert-butyl peroxide, benzoyl peroxide, diacetyl peroxide, tert-butyl acetate, tert-butyl hydroperoxide, dicumyl peroxide, or 2,2'-azobisisobutyronitrile (AIBN), but is not limited thereto.

The second step of preparing a chain transfer agent radical may be performed by putting the radical compound prepared in the first step to a reaction with the chain transfer agent represented by Formula 3, wherein the chain transfer agent represented by Formula 3 may be selected from the group consisting of bis[3-(triethoxysilyl)propyl]tetrasulfide (TESPT), bis[3-(trimethoxysilyl)propyl]tetrasulfide (TMSPT), and a mixture thereof, but is not limited thereto.

The third step of forming an intermediate radical compound with a single end modified by subjecting the chain transfer agent radical prepared in the second step and the monomer to a polymerization reaction, and the chain transfer agent and the monomer may be added at a molar ratio of 1:(50 to 500) to react.

The fourth step of forming a compound with both ends modified may be performed by subjecting the intermediate radical compound formed in the third step to a reaction with a chain transfer agent represented by Formula 3 above.

In the second and fourth steps, a reaction may be performed as the -Sc- bond provided in the chain transfer agent is broken by the radical compound.

The first to fourth steps may be performed at 130 to 150°C, but are not limited thereto.

Preferably, the initiator, the chain transfer agent, and the monomer may be added at a molar ratio of 1: (5 to 20) : (500 to 2000), but are not limited thereto.

The present invention provides a rubber composition for tire, including a rubber polymer; and a compound represented by Formula 1 below as an active ingredient.

<Formula 1> Rₓ(RO)₃₋ₓ-Si-(CH₂)ₐ-S_{c}-(M)-S_{d}-(CH₂)_{b}-Si-(OR)₃₋ₓR'ₓ

In Formula 1, R and R' may each be same or different and are selected from hydrogen or (C1-C6) alkyl; x is an integer selected from 0 to 2; a and b are each independently an integer selected from 1 to 5; c and d are each independently an integer selected from 1 to 9; and M is a polymer chain including one or two or more diene monomers.

Preferably, the M may be one or two or more selected from compounds represented by the following formulas 2-1, 2-2, or 2-3.

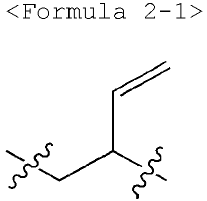

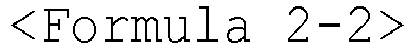

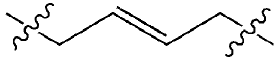

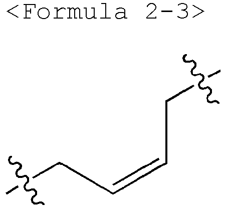

Preferably, the M may be composed of 20 to 25 mol% of the compound represented by Formula 2-1 and 75 to 80 mol% of the compounds represented by Formulas 2-2 and 2-3, but is not limited thereto.

Preferably, the M may have a number average molecular weight of 500 to 50,000 g/mol, more preferably 1000 to 10,000 g/mol, but is not limited thereto.

Alternatively, the M may be a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer, but is not limited thereto.

The compound according to the present invention may include a unit structure derived from the M, and may preferably be a butadiene polymer, that is, a butadiene rubber with both ends modified, but is not limited thereto.

The butadiene rubber with both ends modified has a very small molecular weight compared to conventional solid butadiene and is in a liquid state at room temperature. Accordingly, like a process oil, it may be used as a processing aid to facilitate mixing of rubber and silica.

Preferably, the compound may have a vinyl content of 15 to 30 parts by weight, more preferably 18 to 25 parts by weight, based on 100 parts by weight of the total compound, but is not limited thereto.

Preferably, the compound may include 1 to 3 functional groups of a silyl group per the compound, but is not limited thereto.

The rubber polymer may be selected from natural rubber; one or more butadiene-based rubbers selected from the group consisting of butadiene rubber, styrene-butadiene rubber, and nitrile rubber; or a mixed rubber thereof.

The present invention provides a rubber manufactured by including the rubber polymer; and a compound represented by Formula 1 below as an active ingredient.

More specifically, the tire may be manufactured by crosslinking the rubber polymer and the silica with the compound.

The rubber polymer may be selected from natural rubber; one or more butadiene-based rubbers selected from the group consisting of butadiene rubber, styrene-butadiene rubber, and nitrile rubber; or a mixed rubber thereof.

Preferably, the rubber polymer may include solution polymerized styrene-butadiene prepared by a continuous method with styrene and butadiene, wherein the styrene may be 20 to 30 parts by weight based on 100 parts by weight of the total styrene-butadiene, and the butadiene may have a vinyl content of 20 to 30 parts by weight based on 100 parts by weight of the total butadiene, but is not limited thereto.

Preferably, the rubber polymer may include a solution polymerized butadiene rubber prepared by a neodymium catalyst, having a cis content of 90% by weight or more, which has excellent wear resistance due to the high cis content.

Preferably, the rubber polymer may be a mixture of the butadiene rubber and the styrene-butadiene rubber at a weight ratio of 1:(3 to 5), but is not limited thereto.

The silica may be included in an amount of 90 to 130 parts by weight, preferably 110 to 120 parts by weight, based on 100 parts by weight of the rubber polymer. When the content of the silica is less than 90 parts by weight based on 100 parts by weight of the rubber polymer, braking performance on a wet road surface may be deteriorated due to a decrease of the silica content, and when it exceeds 130 parts by weight, the amount of silica is much and processing may be difficult during mixing, and thus the range above is preferable.

Preferably, the silica may be precipitated silica having a CTAB surface area of 180 m²/g to 220 m²/g. In this case, due to easy dispersion, there is an advantage in improving wear resistance performance, and the braking performance on a wet road surface may be further improved.

The compound may be included in an amount of 5 to 50 parts by weight based on 100 parts by weight of the rubber polymer. When the amount of the compound is less than 5 parts by weight based on 100 parts by weight of the rubber polymer, mixing of the rubber polymer and the silica may not occur smoothly, and the effect of improving wear performance and fuel efficiency performance may not be significant. In addition, when the content of the compound exceeds 50 parts by weight based on 100 parts by weight of the rubber polymer, the glass transition temperature of the tire may be greatly reduced, and thus an adverse effect of deteriorating the braking performance on a wet road surface may occur.

The tire may be manufactured by further including one or two or more selected from the group consisting of a coupling agent, a softener, a vulcanizing agent, a vulcanization accelerator, a cross-linking agent, a cross-linking activator, an antioxidant, an accelerator, and an super accelerator, but is not limited thereto.

Preferably, the vulcanizing agent may include a sulfur vulcanizing agent. As the sulfur vulcanizing agent, elemental sulfur or a vulcanizing agent that produces sulfur, for example, amine disulfide or polymer sulfur, may be used, and preferably elemental sulfur may be used.

The vulcanizing agent may be used in an amount of 1.0 to 1.5 parts by weight based on 100 parts by weight of the rubber polymer, and is preferably within the range above because it can make the rubber less sensitive to heat and chemically stable by providing an appropriate vulcanizing effect.

In addition, as the vulcanization accelerator, one selected from the group consisting of amine, disulfide, guanidine, thio, urea, thiazole, thiuram, sulfene amide, and a combination thereof may further be included in an amount of 1.0 to 3.0 parts by weight based on 100 parts by weight of the rubber polymer.

As an antioxidant, the tire may further include any one selected from the group consisting of N-(1,3-dimethylbutyl)-N'-phenyl-p-phenylenediamine (6PPD), N-phenyl-N'-isopropyl-p-phenylenediamine, N,N'-diphenyl-p-phenylenediamine (3PPD), 2,2,4-trimethyl-1,2-dihydroquinoline (RD), and a combination thereof in an amount of 1 to 5 parts by weight based on 100 parts by weight of the rubber polymer.

Of course, in addition to the above, various additives such as zinc oxide, stearic acid, coupling agents, or processing aids used in conventional tire manufacturing may be selected and used as needed.

A tire according to the present invention may be a passenger car tire, a racing tire, an airplane tire, an agricultural machinery tire, an off-the-road tire, a truck tire, or a bus tires, but is not limited thereto.

In addition, the tire may be a radial tire or a bias tire, and is preferably a radial tire.

The present invention provides a tire manufacturing method including: a first step of preparing a rubber mixture by mixing the rubber composition for tire, including a rubber polymer; and a compound represented by Formula 1 below as active ingredients; and silica; a second step of molding the prepared rubber mixture into a tire shape; and a third step of performing a vulcanization reaction by heating the rubber mixture of a tire shape.

Features corresponding thereto may be substituted in the parts described above.

In the tire manufacturing method according to the present invention, the first step of manufacturing a rubber mixture may be performed by further including a conventional process oil, but is not limited thereto.

The compound may be added as a processing aid in place of a part or all of a conventional process oil, and preferably, the compound may replace a part of the oil so that the compound and the process oil may be included at the same time.

As described above, when a tire is manufactured, by using a rubber composition for tire including the compound above, fuel efficiency performance and wear performance may be greatly improved, while preventing deterioration of properties due to changes over time.

In addition, the present invention provides a rubber composition including a compound represented by Formula 1 below as an active ingredient.

<Formula 1> R'ₓ(RO)₃₋ₓ-Si-(CH₂)ₐ-S_{c}-(M)-S_{d}-(CH₂)_{b}-Si- (OR)₃₋ₓR'ₓ

In Formula 1, R and R' may each be same or different and are selected from hydrogen or (C1-C6) alkyl; x is an integer selected from 0 to 2; a and b are each independently an integer selected from 1 to 5; c and d are each independently an integer selected from 1 to 9; and M is a polymer chain comprising one or two or more diene monomers.

The rubber composition may further include one or two or more selected from the group consisting of natural rubber, synthetic rubber, a coupling agent, a softener, a vulcanizing agent, a vulcanization accelerator, a cross-linking agent, a cross-linking activator, an antioxidant, an accelerator, and an super accelerator.

The rubber compositions may be for use in manufacturing tires, profiles, cable sheaths, hoses, drive belts, conveyor belts, tire treads, shoe soles, sealing rings or damping elements.

Features corresponding thereto may be substituted in the parts described above.

### MODES OF INVENTION

Hereinafter, the present invention will be described in detail through examples to help understanding. However, the following examples only illustrate the content of the present invention, and the scope of the present invention is not limited to the following examples. Examples of the present invention are provided to more completely explain the present invention to those skilled in the art.

### <Example 1> Preparation of Compound 1 (liquid butadiene with both ends modified)

### 1. Preparation

Cyclohexane (99%, Samchun Chemical Co., Seoul, South Korea), bis-[3-(triethoxysilyl)propyl]tetrasulfide (TESPT, Si-69, Evonik Korea Ltd., Korea), di-tert-butyl peroxide (Sigma-Aldrich Corp., Seoul, Korea), azobisisobutyronitrile (2,2'-Azobisisobutyronitrile, AIBN, Sigma-Aldrich Corp., Seoul, Korea), 1,3-butadiene (Kumho Petrochemical Co., Daejeon, Korea), styrene (Samchun Chemical Co., Seoul, Korea), and butyl acrylate (Sigma-Aldrich Corp., Seoul, Korea) were prepared.

### 2. Synthesis

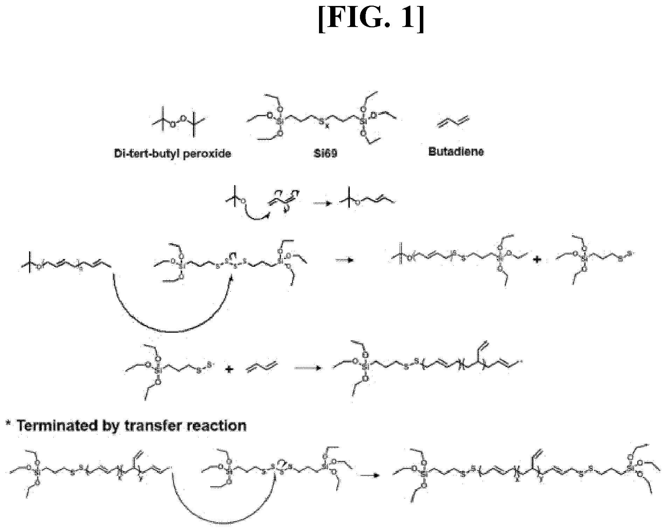

TESPT (Si-69), di-tert-butyl peroxide (I), and cyclohexane were each added to a high-temperature, high-pressure stirred reactor (1 L) made of stainless steel at room temperature and then replaced with nitrogen. Through a gas line of the reactor 1,3-butadiene (monomer) (BD) was injected. The temperature was then raised to 135°C and polymerization was performed for the corresponding time under a specific pressure. Afterwards, the temperature was lowered to 15°C to terminate the reaction, and after reaching 15°C, unreacted 1,3-butadiene was removed through a vent line. Cyclohexane was removed by using reduced pressure distillation. The remaining initiator and chain transfer agent were removed by precipitating the polymer in ethanol and then using a centrifuge (FIG. 1).

### <Example 1-1> Preparation of Compound A

Compound A was prepared by the method of Example 1, using 18 g of TESPT, 0.49 g of di-tert-butyl peroxide, 180 g of cyclohexane, and 180 g of 1,3-butadiene and performing polymerization under a pressure of 18 bar for 4 hours.

### <Example 1-2> Preparation of Compound B

Compound B was prepared by the method of Example 1, using 9 g of TESPT, 0.49 g of di-tert-butyl peroxide, 180 g of cyclohexane, and 180 g of 1,3-butadiene and performing polymerization under a pressure of 18 bar for 4 hours.

### <Example 1-3> Preparation of Compound C

Compound C was prepared by the method of Example 1, using 9 g of TESPT, 0.49 g of di-tert-butyl peroxide, 180 g of cyclohexane, and 180 g of 1,3-butadiene and performing polymerization under a pressure of 40 bar for 4 hours.

### <Example 1-4> Preparation of Compound D

Compound D was prepared by the method of Example 1, using 9 g of TESPT, 0.49 g of di-tert-butyl peroxide, 180 g of cyclohexane, and 180 g of 1,3-butadiene and performing polymerization under a pressure of 40 bar for 8 hours.

### <Example 1-5> Preparation of Compound E

Compound E was prepared by the method of Example 1, using 21.6 g of TESPT, 0.73 g of di-tert-butyl peroxide, 180 g of cyclohexane, and 180 g of 1,3-butadiene and performing polymerization under a pressure of 40 bar for 8 hours.

### <Example 1-6> Preparation of Compound F

Compound F was prepared by the method of Example 1, using 18 g of TESPT, 0.97 g of di-tert-butyl peroxide, 180 g of cyclohexane, and 180 g of 1,3-butadiene and performing polymerization under a pressure of 40 bar for 8 hours.

### <Example 1-7> Preparation of Compound G

Compound G was prepared by the method of Example 1, using 0.78 g of TESPT, 0.047 g of azobisisobutyronitrile in place of di-tert-butyl peroxide, and 15 g of styrene in place of 1,3-butadiene and performing bulk polymerization at 70°C under atmospheric pressure for 8 hours.

### <Example 1-8> Preparation of Compound H

Compound H was prepared by the method of Example 1, using 0.28 g of TESPT, 0.019 g of azobisisobutyronitrile in place of di-tert-butyl peroxide, and 15 g of butyl acrylate in place of 1,3-butadiene and performing bulk polymerization at 70°C under atmospheric pressure for 8 hours.

### <Experimental Example 1> Analysis of Properties of Compound

### 1-1 Analytical method

### 1) Analysis of molecular weight

With size exclusion chromatography (SEC) consisting of a solvent delivery unit, a refractive index detector, and 3 types of styragel column [HT 6E (10µm, 7.8 mm × 300 mm), HMW 7 column (15-20um, 7.8 mm × 300 mm), HMW 6E column (15-20um, 7.8 mm × 300 mm)], molecular weight correction was performed by using a polybutadiene standard sample (Waters Corp., Germany).

### 2) Confirmation of vinyl content

The vinyl content in the compounds prepared according to Example 1 was confirmed by using proton nuclear magnetic resonance (¹H NMR, Varian, Unity Plus 300 spectrometer, Garden State Scientific, Morristown, NJ, USA). The compounds were dissolved at a concentration of 15 mg/mL in a 5 mm NMR tube by using deuterochloroform (CDCl₃, Cambridge Isotope Laboratories, Inc., Andover, MA, USA) as a solvent.

### 3) Confirmation of glass transition temperature

The glass transition temperature (T_{g}) of the compounds was measured by using differential scanning calorimetry (DSC) with a differential scanning calorimeter (DSC-Q10, TA Instruments, New Castle, DE, USA). Thermograms for samples (3 - 6 mg) were obtained by heating the samples from -120°C to -20°C at a heating rate of 10°C/min under nitrogen atmosphere.

### 1-2. Analytical Results

When the degree of polymerization (Dₚ) of liquid butadiene (LqBR) is equal to or less than 100, it exists in a viscous liquid state at room temperature, and its properties vary depending on its chain length and microstructure. Therefore, in this experiment, it was attempted to synthesize liquid butadiene with both ends modified (DF-LqBR) with a molecular weight of Dₚ≤100.

Table 1 below analyzes the properties of the compounds prepared according to Example 1.

**[Table 1]**

| Item | Comp ound A (Exa mple 1-1) | Comp ound B (Exa mple 1-2) | Comp ound C (Exa mple 1-3) | Comp ound D (Exa mple 1-4) | Comp ound E (Exa mple 1-5) | Comp ound F (Exa mple 1-6) | Comp ound G (Exa mple 1-7) | Comp ound H (Exa mple 1-8) |
|---|---|---|---|---|---|---|---|---|
| [I]:[Si-69]:[M] | 1:5: 100 0 | 1:10 : 100 0 | 1:10 : 100 0 | 1:10 :100 0 | 1.5: 12 :100 0 | 2:10 :100 0 | 2:10 : 100 0 | 1:6. 25 :100 0 |
| Reaction time (hr) | 4 | 4 | 4 | 8 | 8 | 8 | 8 | 8 |
| Pressure | 18ba r | 18ba r | 40ba r | 40ba r | 40ba r | 40ba r | 1-2bar | 1-2bar |
| Molecular weight (Mn, g/mol) | 3, 80 0 | 5,90 0 | 3,46 0 | 5,07 0 | 4,57 0 | 5,23 0 | 7, 00 0 | 82,3 60 |
| Molecular weight distribut ion (Mw/Mn) | 2.16 | 2.88 | 2.45 | 3.06 | 2.84 | 2.90 | 1.31 | 1.51 |
| Vinyl content (wt%) | 20 | 21 | 22 | 22 | 22 | 22 | - | - |
| Glass transitio n temperatu re (°C) | - 84.0 | - 82.8 | - 85.6 | - 94.1 | - 88.5 | - 83.4 | 70.9 | - 47.1 |
| Functiona lity (Si/Chain ) | 2.1 | 1.92 | 2.33 | 2.10 | 2.02 | 1.92 | 1.86 | 1.74 |

| | | | | | | | | |
|---|---|---|---|---|---|---|---|---|
| * I: Initiator / Si-69: Chain transfer agent (TESPT) / M: Monomer | | | | | | | | |

### <Example 2> Preparation of Rubber Composition

Table 2 below shows the composition of each material for manufacturing a rubber composition for tire tread including the Compounds A-F prepared according to Example 1 above.

**[Table 2]**

| (Unit: part by weight ) | Comp arat ive Exam ple 1 | Comp arat ive Exam ple 2 | Rubb er Comp osit ion A | Rubb er Comp osit ion B | Rubb er Comp osit ion C | Rubb er Comp osit ion D | Rubb er Comp osit ion E | Rubbe r Compo sitio n F |
|---|---|---|---|---|---|---|---|---|
| S-SBR¹⁾ | 80 | 80 | 80 | 80 | 80 | 80 | 80 | 80 |
| BR²⁾ | 20 | 20 | 20 | 20 | 20 | 20 | 20 | 20 |
| Silica 3) | 120 | 120 | 120 | 120 | 120 | 120 | 120 | 120 |
| Coupli ng agent⁴ ) | 20 | 20 | 20 | 20 | 20 | 20 | 20 | 20 |
| Soften er⁵⁾ | 40 | 30 | 30 | 30 | 30 | 30 | 30 | 30 |
| Compar ative Exampl e²⁶⁾ | - | 10 | - | - | - | - | - | - |
| Compou nd A | - | - | 10 | - | - | - | - | - |
| Compou nd B | - | - | - | 10 | - | - | - | - |
| Compou nd C | - | - | - | - | 10 | - | - | - |
| Compou nd D | - | - | - | - | - | 10 | - | - |
| Compou nd E | - | - | - | - | - | - | 10 | - |
| Compou nd F | - | - | - | - | - | - | - | 10 |
| Zinc oxide⁷ ) | 3 | 3 | 3 | 3 | 3 | 3 | 3 | 3 |
| steari c acid⁸⁾ | 1 | 1 | 1 | 1 | 1 | 1 | 1 | 1 |
| Antiox idant^{9 )} | 2 | 2 | 2 | 2 | 2 | 2 | 2 | 2 |
| Sulfur ¹⁰⁾ | 1.3 | 1.3 | 1.3 | 1.3 | 1.3 | 1.3 | 1.3 | 1.3 |
| CBS¹¹⁾ | 1.6 | 1.6 | 1.6 | 1.6 | 1.6 | 1.6 | 1.6 | 1.6 |
| DPG¹²⁾ | 2 | 2 | 2 | 2 | 2 | 2 | 2 | 2 |
| ZBEC^{13 )} | 0.2 | 0.2 | 0.2 | 0.2 | 0.2 | 0.2 | 0.2 | 0.2 |

Details of the materials included in Table 2 are described below.
1) S-SBR (Solution-Styrene Butadiene Rubber) is a solution polymerized styrene-butadiene rubber (5220M, Kumho Petrochemical Co., Ltd., Korea) manufactured by a continuous method, having a styrene content of 26.5% by weight, a vinyl content in butadiene of 26% by weight, a Mooney viscosity of 54, and a glass transition temperature of -48°C.
2) BR is a solution-polymerized butadiene rubber (CB24, Lanxess Chemical Industry Co., Ltd., Cologne, Germany) produced by a neodymium catalyst, having a cis content in butadiene of 96% by weight and a Mooney viscosity of 44.
3) The silica used is a micropearl type precipitated silica (ZEOSIL 195MP, Solvay Silica Korea Co., Ltd., Gunsan, Korea) having a cetyl trimethyl ammonium bromide (CTAB) surface area of 180 m²/g to 220 m²/g.
4) The coupling agent is a coupling agent consisting of 50% by weight of bis-[3-(triethoxysilyl)propyl]tetrasulfide (TESPT) and 50% by weight of carbon black N330, and the trade name thereof is X50S (Evonik Industries AG, Essen, Germany).
5) The softener (process oil) used is treated distilled aromatic extracted (TDAE) oil (Vivatec 500, Kukdong Oil & Chemicals Co., Yangsan, Korea) having a total content of polycyclic aromatic hydrocarbon (PAH) components of 3% by weight or less, a kinematic viscosity of 95 (210 °F SUS), an aromatic component in the softener of 25% by weight, an naphthenic component of 32.5% by weight, and a paraffinic component of 47.5% by weight.
6) Comparative Example 2 is an unmodified liquid butadiene rubber, specifically, a liquid polybutadiene rubber (LBR 307, Kuraray, Japan) synthesized to have a number average molecular weight of 4,400 g/mol, a vinyl content of 15% by weight, and a glass transition temperature of -95°C.
7) The zinc oxide was used as a crosslinking activator, and zinc oxide No. 2 (Sigma-Aldrich Corp., Seoul, Korea) was used.
8) Stearic acid was used as a cross-linking activator (Sigma-Aldrich Corp., Seoul, Korea).
9) As an antioxidant, N-(1,3-dimethylbutyl)-N'-phenyl-p-phenylenediamine [6PPD, Kumho Petrochemical Co., Daejeon, Korea] was used.
10) The sulfur was used as a crosslinking agent, and sulfur powder (elemental sulfur, Daejung Chemicals & Metals Co., Siheung, Korea) was used.
11) As an accelerator, CBS [N-cyclohexyl-2-benzothiazolylsulfenamide, 98%, Tokyo Chemical Industry Co. Ltd., Tokyo, Japan] was used.
12) DPG (1,3-Diphenylguanidine, 98%, Tokyo Chemical Industry Co. Ltd., Tokyo, Japan)
13) As a super accelerator, zinc dibenzyl dithiocarbamate (ZBEC; Sigma-Aldrich Corp., Seoul, Korea) was used.

Manufacturing of the rubber composition was performed according to the rubber composition manufacturing method shown in Table 3 below.

**[Table 3]**

| Step | Time (min: sec) | Method |
|---|---|---|
| Step 1 | 0:00-0:40 | Rubber injection (initial temperature: 100°C) |
| | 0:40-1:20 | Mixing |
| | 1: 20-2:20 | Adding silica 1/2 + X50S 1/2 +DPG 1/2 + oil 1/2 |
| | | + compound 1/2 |
| | 2:20-3:20 | Mixing |
| | 3:20-4:20 | Adding silica 1/2 + X50S 1/2 +DPG 1/2 + oil 1/2 + compound 1/2 |
| | 4:20-5:20 | Mixing |
| | 5:20-5:40 | Adding ZnO, St/A, 6PPD |
| | 5:40-8:00 | Mixing |
| | 8:00-9:00 | Ram up |
| | 9:00-11:40 | Additional mixing and dumping (dumping temperature: 150-155°C) |
| Step 2 | 0: 00-0: 40 | Adding a masterbatch in Step 1 (initial temperature: 50°C) |
| | 0:40-1:00 | Mixing |
| | 1:00-1:20 | Adding curatives |
| | 1:20-3:00 | Mixing and dumping (dump temperature: 80-90°C) |

As shown in Table 3, the rubber composition for tire tread was manufactured through a two-step continuous manufacturing process. That is, it may be manufactured in a suitable mixer by using a first step (non-production step) of thermomechanical treating or kneading at a maximum temperature ranging from 100°C to 180°C, preferably at a high temperature of 130°C to 160°C; and a second step (production step) of mechanically treating at less than 110°C, for example, a low temperature of 40°C to 100°C during a finishing step of mixing a crosslinking system.

### <Experimental Example 2> Analysis of Properties of Compound

### 2-1. Analytical Method

### 1) Mooney viscosity (ML1+4@100°C)

It was measured with a Mooney viscometer (Vluchem IND Co., Korea) according to ASTM D-1646.

### 2) Mechanical properties

Using a universal testing machine (UTM, KSU-05M-C, KSU Co., Korea) according to ASTM D412, the modulus at 100% elongation (modulus, M100%) and the modulus at 300% elongation (M300) %), and the elongation were measured.

### 3) Wear resistance performance

A cylindrical specimen with a diameter of 16 mm and a thickness of 8 mm was manufactured according to DIN 53516. The specimen was ground for 40 m at a speed of 40 rpm by using a German Industrial Standard (Deutsche Industrie Normen, DIN) abrasion tester, and the amount of mass loss was measured.

### 4) Dynamic viscoelasticity

For the temperature sweep, the storage modulus (G'), loss modulus (G"), and tan δ were measured by using an ARES measurement instrument in a torsion mode at a strain of 0.5% and a frequency of 10 Hz from -60°C to 70°C.

The strain sweep was measured by using a dynamic material thermal spectrometer (DMTS, Eplexor 500N, GABO GmbH & Co. KG, Germany) in a tension mode at a temperature of 60°C and a frequency of 10 H with a dynamic strain from 0.5% to 10%.

### 2-2. Analytical Results

Table 4 below shows the results of analyzing the properties of the rubber composition according to Experimental Example 2.

**[Table 4]**

| Item | Com par ati ve Exa mpl e 1 | Com par ati ve Exa mpl e 2 | Rubb er Comp osit ion A | Rubb er Comp osit ion B | Rubb er Comp osit ion C | Rubb er Comp osit ion D | Rubb er Comp osit ion E | Rubb er Comp osit ion F |
|---|---|---|---|---|---|---|---|---|
| Payne effect (ΔG',MPa) | 7.3 6 | 6.8 4 | 5.39 | 5.65 | 4.16 | 5.57 | 5.94 | 5.93 |
| Mooney viscosity (ML₁₊₄ @100° C) | 154 | 152 | 139 | 148 | 117 | 134 | 140 | 142 |
| Extraction weight loss (%) : Value for replaced 10phr | 100 | 84 | 1 | 2 | 8 | 10 | 5 | 3 |
| Total crosslink density (Filler-rubber interactio n + chemical crosslink density, 10⁻⁴ mol/g) | 1.4 5 | 1.3 4 | 1.65 | 1.57 | 1.59 | 1.66 | 1.64 | 1.62 |
| Filler-rubber interactio n (10⁻⁴ mol/g) | 1.0 1 | 0.9 4 | 1.16 | - | - | - | 1.15 | 1.15 |
| Chemical crosslink density (10⁻⁴ mol/g) | 0.4 4 | 0.4 0 | 0.49 | - | - | - | 0.49 | 0.47 |
| 30% modulus (kgf/cm²) | 19. 3 | 18. 7 | 23.4 | 22.7 | 22.0 | 22.2 | 21.6 | 22.1 |
| 300% modulus (kgf/cm²) | 173 | 145 | 166 | 176 | 161 | 170 | 167 | 166 |
| DIN abrasion (mg) (Index) | 110 (10 0) | 99 (11 0) | 96 (113 ) | 103 (106 ) | 97 (112 ) | 99 (110 ) | 100 (109 ) | 99 (110 ) |
| Glass transition temperatur e (°C) | - 38. 8 | - 42. 5 | - 40.0 | - 40.5 | - 40.9 | - 41.6 | - 41.6 | - 41.9 |
| G' at - 30°C, MPa (Index) | 170 (10 0) | 142 (11 6) | 146 (114 ) | 153 (110 ) | 157 (108 ) | 155 (109 ) | 161 (105 ) | 156 (108 ) |
| G" at 0°C, MPa (Index) | 11. 4 (10 0) | 10. 5 (92 ) | 9.9 (87) | 10.2 (89) | 11.1 (96) | 11.0 (96) | 10.9 (96) | 10.9 (96) |
| Tan δ at 60°C (Index) | 0.1 77 (10 0) | 0.1 81 (98 ) | 0.17 0 (104 ) | 0.16 9 (105 ) | 0.16 8 (105 ) | 0.17 1 (103 ) | 0.17 1 (103 ) | 0.17 3 (102 ) |

Referring to Table 4 above, the Payne effect represents a filler-filler interaction of the unvulcanized product. The decrease of the storage modulus (G') due to an increase of the strain amplitude is a result exhibited by the destruction of the filler network, and the larger the ΔG' value, the stronger the filler-filler interaction. The compound prepared according to Example 1 showed a low Payne effect value as the silica dispersion was improved by hydrophobizing the silica surface.

The Mooney viscosity is an indicator of compound processability, and the compound not only improves silica dispersion but also plays the role of a lubricant between raw rubber materials and thus makes chain slippage occur well, thereby reducing the Mooney viscosity of the rubber composition.

The extraction weight loss value is an experimental result capable of predicting the migration of processing aids from the vulcanized product, and the lower the value, the higher the extraction resistance.

The compound prepared according to Example 1 may be fixed to the rubber network through co-vulcanization with the raw rubber materials during vulcanization, and the terminal functional group may be fixed to the silica surface through a silanization reaction, and thus the extraction amount was smaller than that of Comparative Example 1. In other words, as the migration phenomenon is reduced, deterioration of the properties due to changes over time may be prevented.

The total crosslink density is defined as the number of crosslink points in a vulcanizate. A high crosslinking density means that the molecular weight between crosslinking points decreases and the number of crosslinking points increases. In the swelling test, the higher the crosslink density, the less solvent molecules may penetrate between the crosslinked rubber chains, resulting in less swelling.

In the compound prepared according to Example 1, the three-dimensional network structure formed through a self-condensation reaction had swelling resistance so that a chemical crosslink density that was higher than that of Comparative Examples 1 and 2 was exhibited. In addition, the filler-rubber interaction may increase due to the coupling reaction with the raw rubber materials by -Si-, and as a result, the total crosslinking density was higher than that of Comparative Examples 1 and 2.

The compound formed a three-dimensional network structure through a self-condensation reaction, thus increasing the initial modulus (30% modulus) in the low-elongation region, compared to Comparative Example 1.

As the filler-rubber interaction increased through the coupling reaction, the compound showed a higher 300% modulus value, compared to Comparative Example 2.

Wear resistance is greatly affected by the glass transition temperature (T_{g}) of rubber and a filler-rubber interaction.

The compound prepared according to Example 1 not only lowered the glass transition temperature of the rubber composition but also increased the filler-rubber interaction through a coupling reaction, thereby improving the wear resistance.

The viscoelastic properties of rubber compositions are laboratory measurements that can predict tire performance, and there is a very high correlation between the two. The storage modulus (G') value at -30°C in Table 4 is an indicator representing the braking performance on icy and snowy roads (snow traction), and the lower the value, the better the snow traction. This is because when the G' value is lower under low-temperature conditions, the tire tread may deform more easily on an icy road surface and the contact area may increase.

For the loss modulus (G") value at 0°C, which is used as an indicator of a tire's braking performance on a wet road surface (wet traction), the higher the value, the better the wet traction performance. In addition, the G" value is higher when the effective filler volume fraction increases. The tanδ value at 60°C is an indicator representing the rolling resistance (RR) of a tire, and it is known that the lower the value, the better the fuel efficiency performance. The main energy dissipation at this temperature is known to be caused by the destruction and regeneration of the filler-filler network and by the free chain ends of a rubber.

The compound has a lower glass transition temperature (T_{g}) than the process oil and thus lowers the glass transition temperature of the rubber composition so that it may significantly improve the braking performance on icy and snowy roads (snow traction) by reducing the flexibility and modulus of the rubber at a low temperature.

As the compound lowers the glass transition temperature of the rubber composition and improves the silica dispersion, the effective filler volume fraction is lowered, and thus it may exhibit a G" value at 0°C that is lower than that of the rubber composition to which a process oil is applied (Comparative Example 1) .

As the ends of the compound are fixed to the silica surface, the number of free chain ends decreases and hysteresis occurs less so that the fuel efficiency characteristics may be improved compared to the rubber composition to which a process oil is applied (Comparative Example 1) and the rubber composition to which unmodified liquid butadiene rubber is applied (Comparative Example 2).

Therefore, referring to the results of Table 4, the rubber compositions for tire tread prepared in Examples include the compound, which is liquid butadiene rubber with both ends modified, and so they may improve both the wear performance and the fuel efficiency performance at the same time and prevent deterioration of properties due to changes over time. Therefore, the compound may be used as a rubber composition for tire tread.

In the foregoing, specific aspects of the present invention are described in detail above, and it is clear to those skilled in the art that these specific technologies are merely preferred implementation embodiments and do not limit the scope of the present invention. Accordingly, the substantial scope of the present invention will be defined by the appended claims and their equivalents. The scope of the present invention is indicated by the claims described below, and all changes or modified forms derived from the meaning and scope of the claims and their equivalent concepts should be construed as being included in the scope of the present invention.

## Claims

1. A compound represented by Formula 1 below:
<Formula 1> R'ₓ(RO)₃₋ₓ-Si-(CH₂)ₐ-S_{c}-(M)-S_{d}-(CH₂)_{b}-Si-(OR)₃₋ₓR'ₓ
wherein in Formula 1 above,
R and R' may each be same or different and are selected from hydrogen or (C1-C6) alkyl;
x is an integer selected from 0 to 2;
a and b are each independently an integer selected from 1 to 5;
c and d are each independently an integer selected from 1 to 9; and
M is a polymer chain comprising one or two or more diene monomers.

2. The compound according to claim 1, wherein the M is one or two or more selected from compounds represented by Formulas 2-1, 2-2, or 2-3 below:

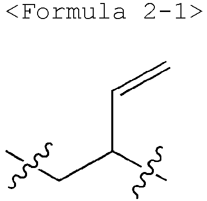

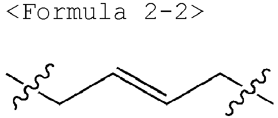

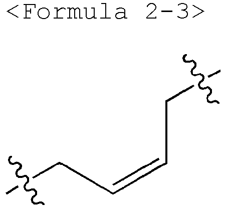

3. The compound according to claim 2, wherein the M is composed of 20 to 25 mol% of the compound represented by Formula 2-1 and 75 to 80 mol% of the compounds represented by Formulas 2-2 and 2-3.

4. The compound according to claim 1, wherein the M has a number average molecular weight of 500 to 50,000 g/mol.

5. The compound according to claim 1, wherein the M is a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer.

6. The compound according to claim 1, wherein the compound is a butadiene rubber with both ends modified.

7. The compound according to claim 1, wherein the compound has a vinyl content of 15 to 30 parts by weight based on 100 parts by weight of the total compound.

8. The compound according to claim 1, wherein the compound comprise 1 to 3 functional groups of a silyl group per the compound.

9. A compound preparation method comprising:
a first step of preparing a radical compound by subjecting an initiator and a monomer to a reaction;
a second step of preparing a chain transfer agent radical by subjecting the prepared radical compound to a reaction with a chain transfer agent represented by Formula 3 below;
a third step of forming an intermediate radical compound with a single end modified by subjecting the prepared chain transfer agent radical and the monomer to a polymerization reaction; and
a fourth step of forming a compound with both ends modified by subjecting the formed intermediate radical compound to a reaction with a chain transfer agent represented by Formula 3 below;
<Formula 3> R'ₓ(RO)₃₋ₓ-Si (CH₂)ₐ-S_{c}- (CH₂)_{b}-Si-(OR)₃₋ₓR'ₓ
wherein in Formula 3 above,
R and R' may each be same or different and are selected from hydrogen or (C1-C6) alkyl;
x is an integer selected from 0 to 2;
a and b are each independently an integer selected from 1 to 5; and
c is an integer selected from 1 to 9.

10. The compound preparation method according to claim 9, wherein in the second step and the fourth step, a -S_{c}- bond provided to the chain transfer agent is broken by the radical compound to react.

11. The compound preparation method according to claim 9, wherein the first to fourth steps are performed at 130°C to 150°C.

12. The compound preparation method according to claim 9, wherein the initiator, the chain transfer agent, and the monomer are added at a molar ratio of 1: (5 to 20):(500 to 2000).

13. A rubber composition for tire, comprising a rubber polymer; and a compound represented by Formula 1 below as active ingredients:
<Formula 1> R'ₓ(RO)₃₋ₓ-Si-(CH₂)ₐ-S_{c}-(M)-S_{d}-(CH₂)_{b}-Si-(OR)₃₋ₓR'ₓ
wherein in Formula 1 above,
R and R' may each be same or different and are selected from hydrogen or (C1-C6) alkyl;
x is an integer selected from 0 to 2;
a and b are each independently an integer selected from 1 to 5;
c and d are each independently an integer selected from 1 to 9; and
M is a polymer chain comprising one or two or more diene monomers.

14. The rubber composition for tire according to claim 13, wherein the M is one or two or more selected from compounds represented by Formulas 2-1, 2-2, or 2-3 below:

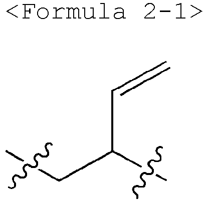

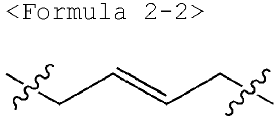

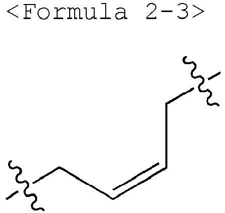

15. The rubber composition for tire according to claim 14, wherein the M is composed of 20 to 25 mol% of the compound represented by Formula 2-1 and 75 to 80 mol% of the compounds represented by Formulas 2-2 and 2-3.

16. The rubber composition for tire according to claim 13, wherein the M has a number average molecular weight of 500 to 50,000 g/mol.

17. The rubber composition for tire according to claim 13, wherein the M is a copolymer of one or two or more monomers selected from the group consisting of butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, an acrylate-based monomer, and an acrylonitrile-based monomer.

18. The rubber composition for tire according to claim 13, wherein the compound is a butadiene rubber with both ends modified.

19. The rubber composition for tire according to claim 13, wherein the compound has a vinyl content of 15 to 30 parts by weight based on 100 parts by weight of the total compound.

20. The rubber composition for tire according to claim 13, wherein the compound comprise 1 to 3 functional groups of a silyl group per the compound.

21. The rubber composition for tire according to claim 13, wherein the rubber polymer is selected from natural rubber; one or more butadiene-based rubbers selected from the group consisting of butadiene rubber, styrene-butadiene rubber, and nitrile rubber; or a mixed rubber thereof.

22. The rubber composition for tire according to claim 13, wherein the compound is included in an amount of 5 to 50 parts by weight based on 100 parts by weight of the rubber polymer.

23. A tire manufactured by comprising a rubber composition for tire according any one of claims 13 to 22.

24. The tire according to claim 23, wherein the tire is be manufactured by further comprising one or two or more selected from the group consisting of silica, a coupling agent, a softener, a vulcanizing agent, a vulcanization accelerator, a cross-linking agent, a cross-linking activator, an antioxidant, an accelerator, and an super accelerator.

25. A tire manufacturing method comprising:
a first step of preparing a rubber mixture by mixing the rubber composition for tire according to any one of claims 13 to 22 and silica;
a second step of molding the prepared rubber mixture into a tire shape; and
a third step of performing a vulcanization reaction by heating the rubber mixture of a tire shape.

26. The tire manufacturing method according to claim 25, wherein the rubber polymer is selected from natural rubber; one or more butadiene-based rubbers selected from the group consisting of butadiene rubber, styrene-butadiene rubber, and nitrile rubber; or a mixed rubber thereof.

27. The tire manufacturing method according to claim 25, wherein the rubber polymer is a mixture of butadiene rubber and styrene-butadiene rubber at a weight ratio of 1:(3 to 5).
